(19) **Europäisches Patentamt**

**European Patent Office**

**Office européen des brevets**

(11) **EP 0 907 067 B1**

(12) **EUROPÄISCHE PATENTSCHRIFT**

(45) Veröffentlichungstag und Bekanntmachung des Hinweises auf die Patenterteilung:
**02.11.2006  Patentblatt 2006/44**

(51) Int Cl.:
*G01C 17/38* *(2006.01)*

(21) Anmeldenummer: **98117708.2**

(22) Anmeldetag: **18.09.1998**

(54) **Verfahren zur Filterung von Messdaten eines Magnetfeldsensors**

Method for filtering the measured data of a magnetic field sensor

Procédé de filtrage des données de mesure d'un capteur de champ magnétique

(84) Benannte Vertragsstaaten:
**AT CH DE FR GB LI NL**

(30) Priorität: **01.10.1997  DE 19743471**

(43) Veröffentlichungstag der Anmeldung:
**07.04.1999  Patentblatt 1999/14**

(73) Patentinhaber: **SIEMENS AKTIENGESELLSCHAFT
80333 München (DE)**

(72) Erfinder: **Hertzner, Alfred Dr. Dipl.-Physiker
78089 Unterkirnach (DE)**

(56) Entgegenhaltungen:
**EP-A- 0 657 746          EP-A- 0 691 523**

## Beschreibung

Die Erfindung betrifft ein Verfahren zur Filterung von Messdaten eines Magnetfeldsensors gemäß dem Oberbegriff des ersten Anspruchs.

Aufbau und Betriebsschaltungen von Magnetfeldsensoren sind bekannt, beispielsweise aus den Schriften DE 41 36 451 A1 und DE 195 38 757 C1. Magnetfeldsensoren werden beispielsweise in elektronischen Kompasseinrichtungen eingesetzt, um durch eine Erfassung der räumlichen Komponenten des Erdmagnetfeldes zu einer Richtungsinformation bzw. Winkelinformation zu gelangen. Im praktischen Einsatz werden die Komponenten des Erdmagnetfeldes jedoch häufig durch zeitlich veränderliche magnetische Störfelder überlagert, die zu einer Verfälschung der Messdaten führen.

Aus der EP 0 657 746 A2 ist ein Verfahren zur Kompensation eines Magnetstörfeldes in einem Fahrzeug, das eine Navigationseinrichtung aufweist, bekannt. Aus den Messwerten der Magnetfeldsonde wird während einer Echtfahrt für eine erste Kompensation ein erster Satz von Störfeldparametern ermittelt und auf Punkte einer kreisförmigen Ortskurve mit dem Radius a um den Koordinaten Nullpunkt transformiert. Während der Fahrt wird zu jedem Messwertpaar der Abstand von dem Nullpunkt und der Winkel berechnet. In einem Segmentspeicher für 360° mit einer Vielzahl von Speicherfällen werden die berechneten Radiuswerte und die kreistransformierten Messwertpaare in ihre zugehörige Speicherzelle eingemittelt. Für jedes Segment wird die Radiusdifferenz aus dem gemittelten Radiuswert und dem Radius a ermittelt und gefiltert, dadurch wird das Maximum nach Richtung und Betrag und der neue Mittelpunkt der Ortskurve und somit der Störfeldvektor berechnet.

Es ist nun die Aufgabe der vorliegenden Erfindung, ein Verfahren aufzuzeigen, mit dem der auf die Messdaten eines Magnetfeldsensors ausgeübte Einfluss von zeitlich veränderlichen magnetischen Störfeldern ausgefiltert wird. Auch geht es darum, Kriterien zu finden, wann Messdaten als Störung zu bewerten sind. Die vorliegende Problemstellung ergibt sich insbesondere bei sehr einfach gestalteten, und damit preiswerten, autarken Kompasseinrichtungen, bei denen eine Korrektur der erfassten Messdaten nicht durch eine vergleichende Auswertung anderer, nicht aus dem Erdmagnetfeld gewonnener Messgrößen erfolgen kann.

Die Aufgabe wird durch die Merkmale des ersten Anspruchs gelöst. Die abhängigen Ansprüche zeigen vorteilhafte Ausgestaltungen und Weiterbildungen der gefundenen Lösung.

Die Lösung setzt die Verwendung eines Verfahrens zur Auswertung von Messdaten eines Magnetfeldsensors voraus, bei dem als Messdaten die Komponenten des Erdmagnetfeldes in einem zeitlichen Takt erfasst und zur Gewinnung einer Winkelinformation auf einen Einheitskreis transformiert werden. Einzelheiten eines solchen Verfahrens sind beispielsweise in den Schriften DE 42 34 651 C1 und DE 44 23 845 C1 beschrieben. Durch Verfahren, bei denen die Messdaten auf einen Einheitskreis transformiert werden, gelingt es bereits, den Einfluss von statischen Störfeldern zu eliminieren.

Von der Transformation verteilen sich die erfassten Messdaten in ihrer grafischen Abbildung in der Messebene in aller Regel zumindest stückweise entlang der Umfangslinie einer in der Messebene liegende Ellipse, die auch "Messkreis" genannt wird. Die Messebene wird durch die beiden Messrichtungen BX und BY des Magnetfeldsensors aufgespannt. Sie liegt normalerweise parallel zur Erdoberfläche. Die gefundene Lösung sieht nun vor, die Filterung der Messdaten anhand eines zu ermittelnden Transformationsfehlers TF durchzuführen.

Von dem Transformationsfehler TF wird die erste zeitliche Ableitung dTF/dt gebildet, weil dadurch kurzzeitige Ausreißer bei den kontinuierlich erfassten Messdaten zuverlässig ausgefiltert werden können. Wenn sich der Transformationsfehler TF oder dessen Ableitung dTF/dt sprunghaft aus einem festgelegten Toleranzbereich hinausbewegt, deutet dieses auf eine Störung hin, die durch ein äußeres, zeitlich veränderliches magnetisches Störfeld hervorgerufen wurde. Für den Toleranzbereich, innerhalb dem die Messdaten $B_x$ und $B_y$ zu akzeptieren und damit nicht auszufiltern sind, haben sich folgende Werte als zweckmäßig erwiesen: $|TF| < 1$ und $|dTF / dt| < 0,5$ Hz.

Diese Filterparameter $|TF|$ und $|dTF / dt|$, die als Schrankenwerte definiert sind, sollten nicht zu scharf gewählt werden, weil sonst die Gefahr besteht, dass zu viele Messdaten ausgefiltert werden oder das Messsystem insgesamt zu langsam wird, weil in einem bestimmten Zeitraum, der zum Sammeln von Messdaten für eine Berechnung der Ellipsenparameter benötigt wird, welche ihrerseits die Voraussetzung für eine Ermittlung der Winkelinformation bilden, zu wenige Messdaten zur Verfügung stehen. Denn der für die Ermittlung der Ellipsenparameter und der Winkelinformation zugrunde liegende Zeitraum kann beispielsweise durch die Anzahl n der zu erfassenden Wertepaare festgelegt sein. Andererseits führt eine angemessene Bewertung des Transformationsfehlers TF und seines Zeitverhaltens dazu, dass der Einfluss zeitlich veränderlicher Störfelder wirksam zurückgedrängt wird, wodurch die Genauigkeit der durch die Kompasseinrichtung zu ermittelnden Winkelinformation verbessert wird.

Für den Fall, dass ein Magnetfeldsensor parallel zur Erdoberfläche zwei zueinander orthogonale Komponenten des Erdmagnetfeldes fortlaufend zu diskreten Zeitpunkten $t_i$ mit i = 1 bis n als Wertepaar erfasst, wobei die Komponenten des Wertepaares nicht notwendigerweise exakt gleichzeitig erfasst werden müssen, aber zumindest bezüglich ihres Erfassungszeitpunktes miteinander korrespondieren, ergibt sich der als Abstand vom Einheitskreis definierte Transformationsfehler TF für dieses Wertepaar nach folgender Formel:

$$TF := $$

$$\left| \left( \left( \cos(\alpha)(B_x - B_{x0}) + \sin(\alpha)(B_y - B_{y0}) \right)/a \right)^2 + \left( \left( -\sin(\alpha)(B_x - B_{x0}) + \cos(\alpha)(B_y - B_{y0}) \right)/b \right)^2 - 1 \right|$$

wobei die Formelzeichen folgende Bedeutung haben

• $B_x$ und $B_y$ sind die Koordinaten des aktuell erfassten Wertepaares,

• $B_{x0}$ und $B_{y0}$ bezeichnen die Mittelpunktskoordinaten des "Messkreises" in der Messebene,

• a und b bezeichnen die Halbachsen der Ellipse,

• $\alpha$ steht für den Drehwinkel der Ellipse in der Messebene.

Andererseits führt eine angemessene Bewertung des Transformationsfehlers TF und seines Zeitverhaltens dazu, daß der Einfluß zeitlich veränderlicher Störfelder wirksam zurückgedrängt wird, wodurch die Genauigkeit der durch die Kompaßeinrichtung zu ermittelnden Winkelinformation verbessert wird.

Die beigefügte **Figur** verdeutlicht nochmals den Erfindungsgedanken. Diese Figur zeigt eine grafische Abbildung von Meßdaten, die mit einem Magnetfeldsensor erfaßt worden sind. Die Meßdaten werden in einem zeitlichen Takt erfaßt, und zwar derart, daß für diskrete aufeinanderfolgende Zeitpunkte $t_i$ mit i = 1 bis n jeweils ein Wertepaar mit den Komponenten $B_x$ und $B_y$ vorliegt, wobei diese Komponenten für Meßwerte stehen, die der Stärke des Erdmagnetfeldes in zwei orthogonal zueinander stehenden Raumrichtungen proportional sind. Die Wertepaare ($B_x$; $B_y$) werden jeweils in einen Speicher eingetragen, der ein zweidimensionales Koordinatennetz mit den Koordinatenachsen BX und BY und dem Ursprung M abbildet. Dabei repräsentiert das Koordinatennetz die Meßebene und die Koordinatenachsen BX und BY stehen für die Meßrichtungen des Magnetfeldsensors. Die Komponenten $B_x$ und $B_y$ werden bei der vorliegenden Speicherorganisation wie kartesische Koordinaten verwendet.

Nach einer gewissen Zeit, nachdem eine gewisse Menge von Meßdaten erfaßt worden sind, sieht man, daß sich bei einer üblichen Verwendung einer mit einem Magnetfeldsensor ausgerüsteten Kompaßeinrichtung die Meßdaten zumindest stückweise entlang der Umfangslinie E einer Ellipse verteilen. Die grafische Abbildung der Meßdatenverteilung wird "Meßkreis" genannt. Ein vollständiger "Meßkreis" entsteht, wenn aufgrund der Bewegung der Kompaßeinrichtung im Erdmagnetfeld in allen Richtungen der Meßebene Meßdaten erfaßt worden sind.

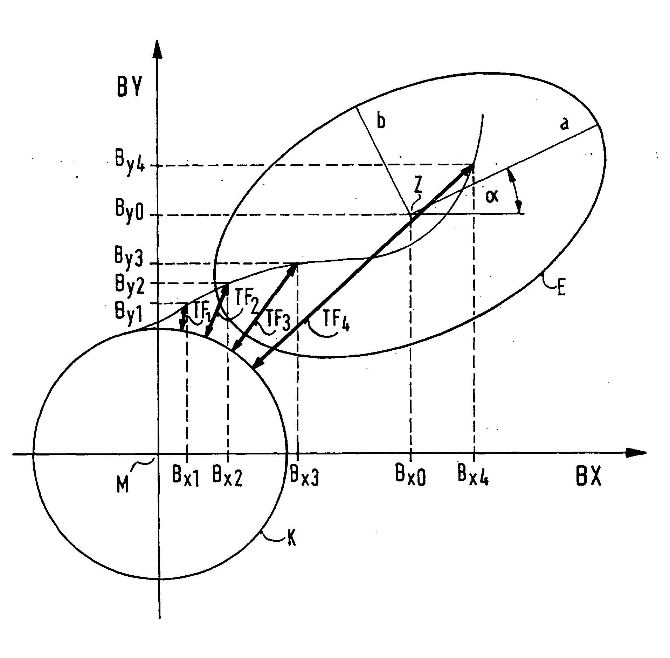

Mit einem bekannten Verfahren, wie beispielsweise mit dem in der eingangs genannten Schrift DE 44 23 845 C1 beschriebenen, läßt sich aus den mit dem Magnetfeldsensor erfaßten Meßdaten das Zentrum Z der Ellipse, dessen Koordinaten in der Figur mit $B_{x0}$ und $B_{y0}$ bezeichnet sind, und die Halbachsen a und b der Ellipse ermitteln. Auch der Drehwinkel $\alpha$, um den die Ellipse mit ihrer großen Halbachse gegen die Abszisse des Koordinatennetzes verdreht sein mag, kann bestimmt werden. Mit diesen Parametern sind die momentane, sich aus der vorliegenden Meßdatensammlung ergebende Lage und Form des "Meßkreises" eindeutig bestimmt und es kann mit der Hilfe dieser Parameter eine Transformation von jedem auf der Umfangslinie E der Ellipse liegenden Wertepaar ($B_x$; $B_y$) auf den Einheitskreis K vorgenommen werden. Man wählt diese Vorgehensweise der Transformation von Meßdaten, um den negativen Einfluß von statischen Störfeldern zu eliminieren. Durch die Transformation wird eine durch ein statisches Störfeld verursachte Verschiebung der Meßdaten rückgängig gemacht, die sie aus ihrer ungestörten Lage um den Koordinatenursprung M herum aufgrund des vorliegenden statischen Störfeldes erfahren haben mögen.

Nachdem die Ellipsenparameter $B_{x0}$, $B_{y0}$, a, b und $\alpha$ bestimmt worden sind, kann zu den als Wertepaar ($B_x$; $B_y$) einlaufenden Meßdaten nach folgender Formel ein Winkel $\psi$ berechnet werden:

$$\psi = \arctan\left( \frac{a}{b} * \frac{-\sin(\alpha) * (B_x - B_{x0}) + \cos(\alpha) * (B_y - B_{y0})}{\cos(\alpha) * (B_x - B_{x0}) + \sin(\alpha) * (B_y - B_{y0})} \right)$$

Zur Beseitigung von Einflüssen, die auf ein äußeres, zeitlich veränderliches magnetisches Störfeld zurückgehen, wird nun erfindungsgemäß von jedem erfaßten Wertepaar ($B_x$; $B_y$) sein Abstand zum Einheitskreis K ermittelt. Dieser Abstand repräsentiert einen Transformationsfehler TF. Er steht stets lotrecht auf der Umfangslinie des Einheitskreises K. In der Figur ist für vier Meßzeitpunkte $t_1$, $t_2$, $t_3$ und $t_4$ der zu dem jeweiligen Wertepaar ($B_x$; $B_y$) gehörende Transformationsfehler TF eingezeichnet. Wenn der absolute Betrag des Transformationsfehlers TF ein festgesetztes Maß überschreitet, soll gemäß der Erfindung das betreffende Wertepaar ($B_x$; $B_y$) ausgefiltert werden. Das betreffende Wertepaar ($B_x$; $B_y$) wird somit in eine anschließende Richtungsbestimmung oder Winkelberechnung nicht eingehen, sondern kann, falls in der Kompasseinrichtung eine dauerhafte Speicherung der Messdaten nicht vorgesehen ist, aus dem Speicher gelöscht werden. Wenn für den Transformationsfehler TF der Schrankenwert gilt: $|TF| < 1$, so würde in der dargestellten Figur das vierte Wertepaar ($B_{x4}$; $B_{y4}$) verworfen, wohingegen die ersten drei Wertepaare ($B_{x1}$; $B_{y1}$), ($B_{x2}$; $B_{y2}$) und ($B_{x3}$; $B_{y3}$) noch weiter berücksichtigt werden.

In vielen Anwendungen ist es sinnvoll, durch Bildung der ersten zeitlichen Ableitung des Transformationsfehlers TF auch festzustellen, wie schnell sich der ermittelte Transformationsfehler FT verändert. Auch das Zeitverhalten des Transformationsfehlers TF, bestimmt durch die Ableitung dTF/dt, kann gut als Filterkriterium benutzt werden. Eine zweckmäßige Festsetzung für diesen Schrankenwert ist: $|dTF/dt| < 0,5$ Hz.

Das vorgeschlagene Verfahren zeigt somit ein Kriterium auf, mit dem entschieden werden kann, wann ein Wertepaar ($B_x$; $B_y$) als störbehaftet zu beurteilen ist. Auch offenbart es praxiserprobte Schrankenwerte für eine sinnvolle Filterung. Nachdem Verfahren zur Eliminierung statischer Störeinflüsse auf Messdaten von Magnetfeldsensoren bereits bekannt sind, bietet das vorgeschlagene Verfahren eine Ergänzung, um bei einer üblichen Verwendung von elektronischen Kompasseinrichtungen eine möglichst hohe Genauigkeit bei der Bestimmung von Richtungsangaben oder Winkelinformationen zu erreichen.

Des weiteren kann die Genauigkeit der Bestimmung von Richtungsangaben oder Winkelinformationen dadurch verbessert werden, dass das erfindungsgemäße Verfahren in einem iterativen Prozess verwendet wird, der nun nachfolgend erläutert werden soll. Es wurde bereits erwähnt, dass sich bei einer üblichen Verwendung einer mit einem Magnetfeldsensor ausgerüsteten Kompaßeinrichtung die erfaßten Meßdaten nach einer gewissen Zeit zumindest stückweise entlang der Umfangslinie E einer Ellipse verteilen. Aus dieser Menge von ungefilterten Meßdaten, den sogenannten Rohdaten, werden die Parameter der Meßdatenverteilung berechnet, was im Regelfall die Parameter $B_{x0}$, $B_{y0}$, a, b und $\alpha$ der Ellipse E sind, um mit deren Hilfe in Verbindung mit einer Transformation der Meßdaten die gewünschten Richtungsangaben oder Winkelinformationen zu berechnen.

In gewissen Applikationen von Kompaßeinrichtungen ist es sinnvoll, das vorgeschlagene Verfahren zur Filterung von Meßdaten eines Magnetfeldsensors nicht nur statisch, d.h. mit einem feststehenden Satz von Ellipsenparametern zu betreiben, sondern es in einen dynamischen, iterativen Prozeß einzubeziehen, indem die Ellipsenparameter $B_{x0}$, $B_{y0}$, a, b und $\alpha$ aus der Menge der gefilterten Meßdaten erneut berechnet werden. Dadurch, daß in der erneuten Berechnung der Ellipsenparameter störbehaftete Meßdaten, die in der Menge der Rohdaten vorgelegen haben mögen, nicht mehr einbezogen werden, wird die Genauigkeit der Werte für die Ellipsenparameter $B_{x0}$, $B_{y0}$, a, b und $\alpha$ verbessert, was sich wiederum günstig auf die Genauigkeit der anschließenden Bestimmung der Richtungsangaben oder Winkelinformationen auswirkt.

Da vom Magnetfeldsensor auch nach der ersten Berechnung der Ellipsenparameter $B_{x0}$, $B_{y0}$, a, b und $\alpha$ weiterhin fortlaufend Meßdaten erfaßt werden, können die neu eingehenden Meßdaten bereits anhand der verbesserten Ellipsenparameter bewertet werden. Sofern vorgesehen ist, daß die Kompaßeinrichtung die vor der Neuberechnung der Ellipsenparameter erfaßten Meßdaten dauerhaft speichert, kann auch der vorhandene Datenbestand nochmals anhand der verbesserten Ellipsenparameter überprüft werden. Der iterative Prozeß kann dadurch fortgesetzt werden, daß nach einer gewissen Zeit nach der letzten Berechnung der Ellipsenparameter, wenn wieder eine bedeutsame Anzahl von Meßdaten erfaßt worden sind, die Ellipsenparameter wiederum anhand der dann vorliegenden, gefilterten Meßdaten neu berechnet werden können.

Auf diese Weise kann ein iterativer Prozeß in Gang gebracht werden, der beispielsweise solange fortgesetzt wird, bis sich die Werte von zwei aufeinanderfolgenden Berechnungen der Ellipsenparameter nur noch innerhalb festgelegter Toleranzen voneinander unterscheiden. Man erreicht dadurch, daß sich die Ellipsenparameter $B_{x0}$, $B_{y0}$, a, b und $\alpha$, deren Werte sich entscheidend auf die Bestimmung der Richtungsangaben oder Winkelinformationen auswirken, schrittweise optimalen Werten anpassen.

Dieses Vorgehen ist dann besonders vorteilhaft, wenn die Ellipsenparameter zum Erreichen der grundsätzlichen Funktionsfähigkeit der Kompaßeinrichtung erstmals fest eingegeben worden sind, was beispielsweise bei der Herstellung der Kompaßeinrichtung geschehen sein könnte. Durch den zuvor beschriebenen iterativen Prozeß berücksichtigt die Kompaßeinrichtung in ihrem Verfahren zur Behandlung der Meßdaten eines Magnetfeldsensors sehr bald die realen Betriebsbedingungen, die durch die Umwelt gegeben sind, in der die Kompaßeinrichtung betrieben wird.

**Patentansprüche**

1.   Verfahren zur Filterung von Messdaten eines Magnetfeldsensors,

a) wobei die Messdaten von Magnetfeldsensor zu diskreten Zeitpunkten erfasst und zwischengespeichert werden,

b) wobei die Messdaten jeweils aus einem Wertepaar ($B_x$; $B_y$) mit orthogonal zueinander stehenden Komponenten $B_x$ und $B_y$ des Erdmagnetfeldes bestehen,

c) wobei die fortlaufende Erfassung der Messdaten zu einer Messdatenansammlung führt, die in ihrer grafischen Abbildung zumindest stückweise entlang der Umfangslinie (E) einer Ellipse besteht und die in einer durch die Messrichtungen (BX) und (BY) des Magnetfeldsensors aufgespannten Messebene liegt,

d) wobei die Wertepaare der Messdaten ausgehend von ihrer Lage in der Messdatenansammlung zur Ermittlung einer Richtungsinformation oder Winkelinformation auf einen Einheitskreis (K) transformiert werden und

e) wobei eine Berechnung und Bewertung eines Transformationsfehlers (TF) erfolgt, der als derjenige Abstand definiert ist, den die Koordinaten eines transformierten Wertepaares vom Einheitskreis (K) aufweisen,

**dadurch gekennzeichnet , dass** das Zeitverhalten des Transformationsfehlers (TF) durch Bildung seiner ersten zeitlichen Ableitung (dTF/dt) ermittelt wird, um damit kurzzeitige Ausreißer bei den erfassten Messdaten auszufiltern.

2. Verfahren nach Anspruch 1, **dadurch gekennzeichnet, dass** der Transformationsfehler (TF) für ein Wertepaar (Bx;By) nach folgender Formel berechnet wird:

$$TF := \left| \left( \left( \cos(\alpha)(B_x - B_{x0}) + \sin(\alpha)(B_y - B_{y0}) \right)/a \right)^2 + \left( (-\sin)(\alpha)(B_x - B_{x0}) + \cos(\alpha)(B_y - B_{y0}) \right)b \right)^2 - 1 \right|$$

wobei die Formelzeichen bedeuten:

- Bx und By sind die Koordinaten des aktuell erfassten Wertepaares,
- Bx0 und By0 bezeichnen die Mittelpunktskoordinaten des "Messkreises" in der Messebene,
- a und b bezeichnen die Halbachsen der Ellipse,
- $\alpha$ steht für den Drehwinkel der Ellipse in der Messebene.

3. Verfahren nach einem der vorangegangenen Ansprüche, **dadurch gekennzeichnet, dass** für den Transformationsfehler (TF) folgender Schrankenwert gilt; |*TF*| < 1.

4. Verfahren nach Anspruch 3, **dadurch gekennzeichnet, dass** für die Bewertung des Zeitverhaltens des Transformationsfehlers (TF), das durch dessen erste zeitliche Ableitung (dTF/dt) gegeben ist, folgender Schrankenwert gilt: [*dTF/dt*] < 0,5 Hz.

**Claims**

1. Method of filtering measured data of a magnetic field sensor, in which

a) the measured data of the magnetic field sensor is captured at discrete instants and stored temporarily,

b) the measured data consists in each case of a value pair ($B_x$; $B_y$) with mutually orthogonal components $B_x$ and $B_y$ of the earth's magnetic field,

c) the continuous capture of measured data results in a measured data collection, which in its graphic mapping exists at least partly along the perimeter line (E) of an ellipse, and which lies in a measurement plane which is spanned by the measurement directions (BX) and (BY) of the magnetic field sensor,

d) the value pairs of the measured data, starting from their position in the measured data collection, are transformed onto a circle (K) with radius 1 to determine directional or angular information,

e) A transformation error (TF), defined as the distance which the co-ordinates of a transformed value pair have from the circle (K) with radius 1, is calculated and evaluated,

**characterized in that** the behaviour over time of the transformation error (TF) is determined by forming its first time derivative (dTF/dt), to filter short-term outliers out of the captured measured data.

2. Method according to Claim 1, **characterized in that** the transformation error (TF) for a value pair ($B_x$; $B_y$) is calculated according to the following formula:

$$TF := [((\cos(\alpha)(B_x - B_{x0}) + \sin(\alpha)(B_y - B_{y0}))/a)^2 + ((-\sin(\alpha)(B_x - B_{x0}) + \cos(\alpha)(B_y - B_{y0}))/b)^2 - 1]$$

where the formula symbols have the following meanings:

- $B_x$ and $B_y$ are the co-ordinates of the value pair currently being captured,
- $B_{x0}$ and $B_{y0}$ designate the mid-point co-ordinates of the "measurement circle" in the measurement plane,
- a and b designate the semi-axes of the ellipse,
- $\alpha$ stands for the angle of rotation of the ellipse in the measurement plane.

3. Method according to one of the preceding claims, **characterized in that** the following limiting value applies to the transformation error (TF): $|TF| < 1$.

4. Method according to Claim 3, **characterized in that** to evaluate the behaviour over time of the transformation error (TF), given by its first time derivative (*dTF*/dt), the following limiting value applies: [dTF/dt] < 0.5 Hz.

**Revendications**

1. Procédé destiné au filtrage de données de mesure d'un capteur de champ magnétique,

a) au cours duquel les données de mesure du capteur de champ magnétique sont saisies et mémorisées en tampon,
b) au cours duquel les données de mesure se composent, dans chaque cas, d'une paire de valeurs ($B_x$; $B_y$) avec des composantes $B_x$ et $B_y$ du champ magnétique terrestre orthogonales l'une par rapport à l'autre,
c) au cours duquel la saisie continue des données de mesure conduit à une collection de données de mesure, dont la représentation graphique se répartit, au moins pièce par pièce, le long du périmètre (E) d'une ellipse et se trouve dans un plan de mesure défini par les directions de mesure (BX) et (BY) du capteur de champ magnétique,
d) au cours duquel les paires de valeurs des données de mesure sont, à partir de leur position dans la collection des données de mesure, transformées sur un cercle unitaire (K) pour déterminer une information de direction ou une information goniométrique et
e) au cours duquel se font un calcul et une évaluation d'une erreur de transformation (TF) qui est définie comme étant l'écartement existant entre les coordonnées d'une paire de valeurs transformées et le cercle unitaire (K),

**caractérisé par le fait que** le comportement dans le temps de l'erreur de transformation (TF) est déterminé en formant sa première dérivée en fonction du temps (dTF/dt), pour, ainsi, filtrer et éliminer des valeurs aberrantes brèves parmi les données de mesure saisies.

2. Procédé selon la revendication 1, **caractérisé par le fait que** l'erreur de transformation (TF) pour une paire de valeurs ($B_x$; $B_y$) est calculée avec la formule suivante:

$$TF := \left| ((\cos(\alpha)(B_x - B_{x0}) + \sin(\alpha)(B_y - B_{y0}))/a)^2 + ((-\sin(\alpha)(B_x - B_{x0}) + \cos(\alpha)(B_y - B_{y0}))/b)^2 - 1 \right|$$

où les symboles ont la signification suivante:

- $B_x$ et $B_y$ sont les coordonnées de la paire de valeurs détectées en temps réel,
- $B_{x0}$ et $B_{y0}$ désignent les coordonnées du point milieu du "cercle de mesure" dans le plan de mesure,
- a et b désignent les demi-axes de l'ellipse,
- $\alpha$ désigne l'angle de rotation de l'ellipse dans le plan de mesure.

3. Procédé selon l'une des revendications précédentes, c a - ractérisé par le fait que, pour l'erreur de transformation (TF), la valeur limite suivante est valable: $|TF| < 1$.

4. Procédé selon la revendication 3, **caractérisé par le fait que**, pour l'évaluation du comportement dans le temps de l'erreur de transformation (TF), qui est donné par sa première dérivée en fonction du temps (dTF/dt), la valeur limite suivante est valable: $|dTF/dt| < 0{,}5$ Hz.